# EUROPÄISCHE PATENTSCHRIFT

(11) **EP 0 647 591 B1**
(45) Veröffentlichungstag und Bekanntmachung des Hinweises auf die Patenterteilung: **20.12.1995**
(21) Anmeldenummer: 94115165.6
(22) Anmeldetag: 27.09.1994
(51) Int. Cl.: C01B 33/193, C08K 3/36, C08L 21/00

(54) **Fällungskieselsäuren**
Precipitated silicas
Silices de précipitation

(30) Priorität: 07.10.1993 DE 4334201; 30.07.1994 DE 4427137
(43) Veröffentlichungstag der Anmeldung: 12.04.1995
(73) Patentinhaber: Degussa Aktiengesellschaft, 60311 Frankfurt (DE)
(72) Erfinder: Esch, Heinz, D-53117 Bonn (DE); Görl, Udo, Dr., D-53332 Bornheim (DE); Kuhlmann, Robert, D-50374 Erftstadt (DE); Rausch, Ralf, Dr., D-52372 Kreuzau (DE)

(56) Entgegenhaltungen:
- EP-A- 0 157 703
- EP-A- 0 407 262
- EP-A- 0 501 227
- EP-A- 0 520 862
- DE-A- 1 467 019

## Beschreibung

Die Erfindung betrifft Fällungskieselsäuren, das Verfahren zu ihrer Herstellung und ihre Verwendung in Kautschukmischungen.

Fällungskieselsäuren können in Kautschukmischungen eingearbeitet werden (S. Wolff, Kautschuk und Gummikunstst. 7 (1988) S. 674). Bekannte Kieselsäuren lassen sich in Kautschukmischungen, besonders bei hohen Füllgraden, nur sehr schlecht dispergieren. Diese schlechte Dispergierbarkeit ist eine der Ursachen, weshalb hohe Kieselsäurefüllgrade in Reifenmischungen nur selten zum Einsatz kommen. Die schlechte Dispergierbarkeit kann zum einen in der Herstellung der gefällten Kieselsäuren liegen. Durch Trocknung, schlechte Vermahlung oder auch zu harte Granulation hervorgerufen, können in der Gummimischung schwer dispergierbare Kieselsäurepartikel (Stippen) vorliegen. Diese können mit dem bloßen Auge erkannt werden.

Zum anderen sind Kieselsäuren sehr polar und daher mit den unpolaren Polymeren der Kautschukmischung nur schlecht phasenverträglich. Diese Form der Dispersion findet auf der Grundlage der Kieselsäureaggregate statt. Sie ist nur mit Hilfe eines Lichtmikroskops zu beurteilen und wird als Mikrodispersion bezeichnet.

Aus dem Dokument EP-A 0 520 862 sind Fällungskieselsäuren, die als Füllstoff in Kautschukmischungen für Reifen eingesetzt werden können, bekannt.

Aus dem Dokument EP-A 0 157 703 ist eine Fällungskieselsäure, die gemäß dem Dokument EP-A 0 501 227 als Füllstoff in Kautschukmischungen für Reifen eingesetzt werden kann, bekannt.

Die bekannten Fällungskieselsäuren haben den Nachteil, daß sie eine schlechte Mikrodispersion besitzen.

Es bestand somit die Aufgabe, eine Fällungskieselsäure mit einer optimalen Phasenverträglichkeit Kautschuk, Polymer und einer guten Mikrodispersion zu entwickeln.

Gegenstand der Erfindung ist eine Fällungskieselsäure, gekennzeichnet durch die folgenden physikalisch-chemischen Parameter:

| | |
|---|---|
| BET-Oberfläche | 35 bis 350 m²/g |
| Verhältnis BET/CTAB-Oberfläche | 0,8 bis 1,1 |
| Porenvolumen PV | 1,6 bis 3,4 ml/g |
| Silanolgruppendichte (V₂=Verbrauch an NaOH) | 6 bis 20 ml |
| Mittlere Aggregatgröße | 250 bis 1500 nm |
| CTAB-Oberfläche | 30 bis 350 m²/g |
| DBP-Zahl | 150 bis 300 ml/100 g |
| V₂/V₁ nach Hg-Porosimetrie | 0,19 bis 0,46, |
| vorzugsweise | 0,20 bis 0,23 |
| DBP/CTAB | 1,2 bis 2,4 |

Die physikalisch-chemischen Parameter werden mit den folgenden Meßmethoden bestimmt:

| | |
|---|---|
| BET-Oberfläche | Areameter, Fa. Ströhlein, gemaß ISO 5794/Annex D |
| Porenvolumen | Quecksilberporosimetrie nach DIN 66 133 |
| Silanolgruppendichte | in Sears-Zahlen nach G.W. Sears, Analyt. Chemistry 12, 1982-83 (1956) |
| Mittlere Aggregatgröße | Photonenkorrelationsspektroskopie |
| CTAB-Oberfläche | bei pH 9, gemäß Jay, Janzen und Kraus in "Rubber Chemistry and Technology" 44 (1971), 1287 |
| DPB-Zahl | ASTM D 2414-88 |
| Hg-Porosimetrie | DIN 66 133 |

Die erfindungsgemäße Fallungskieselsaure kann insbesondere die folgenden physikalisch-chemischen Kenndaten aufweisen:

| BET-Oberfläche (m²/g) | HG-Porosimetrie (ml/g) | Sears-Zahl V₂ NaOH(ml) | Mittl. Aggregatgröße (nm) |
|---|---|---|---|
| 35 - 100 | 2,5 - 3,4 | 6 - 12 | 900 - 1500 |
| 100 - 150 | 2,4 - 3,2 | 8 - 15 | 400 - 850 |
| 150 - 200 | 1,6 - 2,4 | 11 - 19 | 300 - 550 |
| 200 - 350 | 1,6 - 2,3 | 12.- 20 | 250 - 520 |

In einer bevorzugten Ausführungsform weist die erfindungsgemäße Fällungskieselsäure eine gute Vermahlbarkeit auf. Sie wird wiedergegeben durch die mittlere Teilchengröße nach Malvern-Laserbeugung (D(4,3)) von < = 11 »m, insbesondere < = 10 »m, gemessen nach Vermahlung auf einer Alpine-Kolloplex-Prallstiftmühle (Z 160) bei einer Durchsatzleistung von 6 kg/h.

Ein weiterer Gegenstand der Erfindung ist ein Verfahren zur Herstellung der Fällungskieselsäure mit den folgenden physikalisch-chemischen Parametern

| | |
|---|---|
| BET-Oberfläche | 35 bis 350 m²/g |
| Verhältnis BET/CTAB-Oberfläche | 0,8 bis 1,1 |
| Porenvolumen PV | 1,6 bis 3,4 ml/g |
| Silanolgruppendichte (V₂=Verbrauch an NaOH) | 6 bis 20 ml |
| Mittlere Aggregatgröße | 250 bis 1500 nm |
| CTAB-Oberfläche | 30 bis 350 m²/g |
| DBP-Zahl | 150 bis 300 ml/100 g |
| V₂/V₁ nach Hg-Porosimetrie | 0,19 bis 0,46, |
| vorzugsweise | 0,20 bis 0,23 |
| DBP/CTAB, | 1,2 bis 2,4 |

welches dadurch gekennzeichnet ist, daß man Alkalisilikat mit Mineralsäuren bei Temperaturen von 60 bis 95 °C unter Aufrechterhaltung eines pH-Wertes von 7,5 bis 10,5 unter kontinuierlichem Rühren umsetzt, die Umsetzung bis zu einer Feststoffkonzentration in der Fällsuspension von 90 bis 120 g/l durchführt, den pH-Wert auf einem Wert gleich oder kleiner 5 einstellt, die Fällungskieselsäure abfiltriert, wäscht, trocknet und gegebenenfalls vermahlt oder granuliert.

In einer bevorzugten Ausführungsform kann man handelsübliches Natronwasserglas mit Wasser bis zu einem pH-Wert von 8 bis 9 verdünnen und zu dieser verdünnten Wasserglaslösung, die einen Gehalt an SiO₂ von ≦ 4,9 g/l aufweist, gleichzeitig konzentrierte Schwefelsäure und dieselbe Wasserglaslösung unter Beibehaltung des pH-Wertes von 8 bis 9 hinzufügen.

Das gleichzeitige Hinzugeben von Wasserglaslösung und Schwefelsäure (Fälldauer) kann über einen Zeitraum von bis 160 Minute, vorzugsweise größer als 90 Minuten, insbesondere innerhalb von 30 bis 90 Minuten, durchgeführt werden.

Dabei kann in Abhängigkeit von der Fälldauer eine unterschiedliche BET-Oberfläche der Kieselsäure eingestellt werden. So ergeben sich bei einer Fälldauer von mehr als 90 Minuten Oberflächen von 35 bis 150 m²/g und bei einer Fälldauer von 30 bis 90 Minuten Oberflächen von 150 bis 350 m²/g.

Die erfindungsgemäße Fällungskieselsäure kann mit Organosilanen der Formeln I bis III modifiziert werden 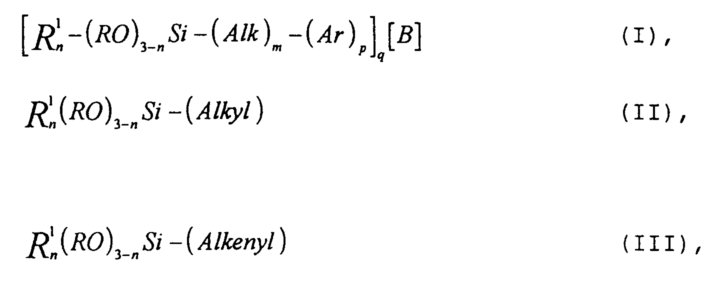
in denen bedeuten
- B:: -SCN, -SH, -Cl, -NH₂ (wenn q = 1) oder -Sx- (wenn q = 2),
- R und R¹:: eine Alkylgruppe mit 1 bis 4 Kohlenstoffatomen, den Phenylrest, wobei alle Reste R und R¹ jeweils die gleiche oder eine verschiedene Bedeutung haben können,
- R:: eine C₁-C₄-Alkyl, -C₁C₄-Alkoxygruppe,
- n:: 0; 1 oder 2,
- Alk:: einen zweiwertigen geraden oder verzweigten Kohlenwasserstoffrest mit 1 bis 6 Kohlenstoffatomen,
- m:: 0 oder 1,
- Ar:: einen Arylenrest mit 6 bis 12 C-Atomen, bevorzugt 6 C-Atome,
- p:: 0 oder 1 mit der Maßgabe, daß p und n nicht gleichzeitig 0 bedeuten,
- x:: eine Zahl von 2 bis 8,
- Alkyl:: einen einwertigen geraden oder verzweigten ungesättigten Kohlenwasserstoffrest mit 1 bis 20 Kohlenstoffatomen, bevorzugt 2 bis 8 Kohlenstoffatomen,
- Alkenyl:: einen einwertigen geraden oder verzweigten ungesättigten Kohlenwasserstoffrest mit 2 bis 20 Kohlenstoffatomen, bevorzugt 2 bis 8 Kohlenstoffatomen.

Die Modifizierung mit Organosilanen kann in Mischungen von 0,5 bis 50 Teilen, bezogen auf 100 Teile Kieselsäure, insbesondere 2 bis 15 Teile, bezogen auf 100 Teile Fällungskieselsäure, durchgeführt werden, wobei die Reaktion zwischen Fällungskieselsäure und Silan während der Mischungsherstellung (in situ) oder außerhalb (vormodifiziert) durchgeführt werden kann.

In einer bevorzugten Ausführungsform der Erfindung kann als Silan das Bis(triethoxysilyl-propyl)tetrasulfan eingesetzt werden.

Die erfindungsgemäße Fällungskieselsäure kann in vulkanisierbaren Kautschukmischungen als Verstärkerfüllstoff in Mengen von 5 bis 200 Teilen, bezogen auf 100 Teile Kautschuk als Pulver, Mikroperlen oder Granulat sowohl mit Silanmodifizierung als auch ohne Silanmodifizierung eingemischt werden.

Die Zugabe eines oder mehrerer der oben genannten Silane kann zusammen mit den erfindungsgemäßen Kieselsäuren zur Kautschukmischung erfolgen, wobei die Reaktion zwischen Füllstoff und Silan während des Mischprozesses bei erhöhten Temperaturen abläuft (in-situ-Modifizierung) oder in bereits vormodifizierter Form (zum Beispiel DE-PS 40 04 781), das heißt, beide Reaktionspartner werden außerhalb der eigentlichen Mischungsherstellung zur Reaktion gebracht.

Neben Mischungen, die ausschließlich die erfindungsgemäßen Kieselsäuren, mit und ohne Organosilane gemäß Formeln I bis III als Füllstoffe enthalten, können die Kautschukmischungen zusätzlich mit einem oder mehreren mehr oder weniger verstärkenden Füllstoffen gefüllt sein. In erster Linie gebräuchlich wäre hier ein Verschnitt zwischen Rußen (zum Beispiel Furnace-, Gas-, Flamm-, Acetylenruße) und den erfindungsgemäßen Kieselsäuren, mit und ohne Silan, aber auch zwischen Naturfüllstoffen, wie zum Beispiel Clays, Kieselkreiden, weiteren kommerziellen Kieselsäuren und den erfindungsgemäßen Kieselsäuren.

Das Verschnittverhältnis richtet sich auch hier, wie bei der Dosierung der Organosilane, nach dem zu erzielenden Eigenschaftsbild der fertigen Gummimischung. Ein Verhältnis von 5 - 95 % zwischen den erfindungsgemäßen Kieselsäuren und den anderen oben genannten Füllstoffen ist denkbar und wird in diesem Rahmen auch realisiert.

Neben den erfindungsgemäßen Kieselsäuren, den Organosilanen und anderen Füllstoffen bilden die Elastomere einen weiteren wichtigen Bestandteil der Kautschukmischung. Die erfindungsgemäßen Kieselsäuren können in allen mit Beschleuniger/Schwefel, aber auch peroxidisch vernetzbaren Kautschukarten, eingesetzt werden. Zu nennen wären hierbei Elastomere, natürliche und synthetische, ölgestreckt oder nicht, als Einzelpolymer oder Verschnitt (Blend) mit anderen Kautschuken, wie zum Beispiel Naturkautschuke, Butadienkautschuke, Isoprenkautschuke, Butadien-Styrol-Kautschuke, insbesondere SBR, hergestellt mittels des Lösungspolymerisationsverfahrens, Butadien-Acrylnitrilkautschuke, Butylkautschuke, Terpolymere aus Ethylen, Propylen und nicht konjugierte Diene. Ferner kommen für Kautschukgemische mit den genannten Kautschuken die folgenden zusätzlichen Kautschuke in Frage:
Carboxylkautschuke, Epoxidkautschuke, Trans-Polypentenamer, halogenierte Butylkautschuke, Kautschuke aus 2-Chlor-Butadien, Ethylen-Vinylacetat-Copolymere, Ethylen-Propylen-Copolymere, gegebenenfalls auch chemische Derivate des Naturkautschuks sowie modifizierte Naturkautschuke.

Ebenso bekannt sind die üblichen weiteren Bestandteile wie Weichmacher, Stabilisatoren, Aktivatoren, Pigmente, Alterungsschutzmittel und Verarbeitungshilfsmittel in den üblichen Dosierungen.

Die erfindungsgemäßen Kieselsäuren, mit und ohne Silan, finden Einsatz in allen Gummianwendungen, wie zum Beispiel Reifen, Fördergurte, Dichtungen, Keilriemen, Schläuche, Schuhsohlen etc.

Die Dispersion, das heißt, die Verteilung eines Stoffes (Füllstoffes) in einer Polymermischung ist von entscheidender Bedeutung für das spätere Eigenschaftsbild des diesen Stoff enthaltenen Artikels. Insbesondere die Reißwerte (Zugfestigkeit, Bruchdehnung, Weiterreißwiderstand), aber auch die Hysterese- und Abriebwerte, hängen stark von der Dispersion ab (C.W. Schweitzer, W.M. Hess, J.E. Callun, Rubber World, 138, No. 6, 809 (1958) und 139, No. 1, 74 (1958)), (W.M. Hess, F.P. Ford, Rubber Chem. Tech., 36, No. 5, 1191 (1963)).

Der Bedeutung dieser Größe für das gummitechnische Wertebild stehen die mangelnden Möglichkeiten gegenüber, diese Größe exakt messen zu können, bzw. viele der gebräuchlichsten Methoden lassen nur eine subjektive Betrachtung und Beurteilung der Dispersion zu.

Die am weitesten verbreiteten Methoden, die Dispersion zu messen, sind in ASTM D 2663-88 beschrieben und wurden alle für die Dispersion von Ruß im Gummi entwickelt, lassen sich jedoch auch zur Messung der Dispersion von kieselsäuregefüllten Mischungen anwenden, vorausgesetzt, die Mischung enthält nur diesen Füllstoff und keine Verschnitte, zum Beispiel Ruß und Kieselsäure.

Bei einer der drei in der oben genannten Vorschrift beschriebenen Methoden handelt es sich um eine visuelle Betrachtung mit bloßem Auge oder leichter Vergrößerung mittels Mikroskop und photographischer Aufnahme der Vulkanisatproben, wobei das Ergebnis anhand einer Zahlenskala von 1 bis 5 unter Zuhilfenahme von 5 Standardphotographien bewertet wird.

Eine weitere Methode ist das Auszählen von Füllstoffagglomeraten mit einer Größe von ≧ 5 »m. Hierzu wird ein Mikrotomschnitt vom Vulkanisat angefertigt und mittels Lichtmikroskopie in Durchsicht der Prozentsatz an Fläche, den diese Agglomerate einnehmen, bestimmt. Auch hier erfolgt eine Einteilung der Dispersion nach Klassen.

Die dritte, beschriebene Möglichkeit ist das Abtasten der Rauhigkeit der Vulkanisatoberfläche mittels einer Nadel. Gemessen wird hierbei die Anzahl und die durchschnittliche Höhe der Oberflächenrauhigkeit. Der Rauhigkeitsfaktor wird ebenfalls wie bei Methode 2 in einem Dispersionsindex von sehr gut bis sehr schlecht übertragen.

Die heute am häufigsten eingesetzte, wenn auch subjektive Methode, die schnell, aussagekräftig und für den Laborbetrieb am geeignetesten ist, ist die mikroskopische Methode (zum Beispiel 30-fache Vergrößerung), bei der die Bewertung der Dispersion im Vulkanisat anhand einer Zahlenskala von 1 - 10 unter Zuhilfenahme von 10 Standardphotographien durchgeführt wird.

Die Dispersion und deren oben genannte Beurteilung stellen eine Eigenschaft der Kieselsäure in der Polymermischung dar. Um den Fälltechniker bereits außerhalb, zum Beispiel einer Kautschukmischung, Aussagen über das spätere Dispersionsverhalten einer Kieselsäure in der Polymermischung machen lassen zu können, bedient er sich der Vermahlbarkeit der Kieselsäure. Mit anderen Worten, die Vermahlbarkeit der Kieselsäure und deren spätere Dispersion, zum Beispiel in Gummi, gehen weitgehend konform.

Diese Vermahlbarkeit kann charakterisiert werden, unter anderem durch die Energie, die benötigt wird, um eine bestimmte Teilchenfeinheit zu erzielen oder umgekehrt durch die Teilchenfeinheit, die sich einstellt, wenn ein Mahlaggregat bei gleicher Leistung und gleichem Produktdurchsatz betrieben wird. Als Mühlentyp wird eine Alpine-Kolloplex-Prallstiftmühle (Z 160) eingesetzt und bei einem konstanten Produktdurchsatz von 6 kg/h betrieben.

Zur Charakterisierung der Teilchenfeinheit wird der mittlere, volumengewichtete Teilchendurchmesser MTG (D(4,3)) aus der Messung mittels Laserbeugung gewählt (Fa. Malvern Instruments, Modell 2600c).

Es ergeben sich für die erfindungsgemäßen Kieselsäuren Werte <= 11 »m, insbesondere <= 10 »m, die bei herkömmlichen Kieselsäuren darüber liegen (>= 12 »m). Dabei hat sich auch gezeigt, daß die erfindungsgemäßen Kieselsäuren bereits herstellungsbedingt so fein sind, daß sie für viele technische Anwendungen im Gegensatz zu den konventionellen Produkten keiner weiteren Vermahlung bedürfen und damit auch wirtschaftliche Vorteile bieten.

Ein weiterer Gegenstand der Erfindung sind vulkanisierbare Kautschukmischungen, die die erfindungsgemäßen Fällungskieselsäuren in Mengen von 5 bis 200 Teilen, bezogen auf 100 Teile Kautschuk, enthalten. Die Einarbeitung dieser Kieselsäure und die Herstellung der diese Kieselsäure enthaltenden Mischungen erfolgt in der in der Gummiindustrie üblichen Art und Weise auf einem Innenmischer oder Walzwerk. Die Darreichungs- bzw. Einsatzform kann sowohl als Pulver, Mikroperlen oder Granulat erfolgen. Auch hier unterscheiden sich die erfindungsgemäßen Kieselsäuren nicht von den bekannten hellen Silikatfüllstoffen.

Die erfindungsgemäßen Fällungskieselsäuren führen bei jeweils konstanter Oberfläche zu den Standardkieselsäuren aufgrund der zuvor genannten Unterschiede zu besseren Dispersionseigenschaften.

Auch bezüglich einiger anderer, wichtiger gummitechnischer Parameter zeigen die erfindungsgemäßen Kieselsäuren bessere Eigenschaften als die bekannten Fällungskieselsäuren. Zu nennen wären hierbei höherer Modul, niedrigerer tan δ als Maß für den Rollwiderstand eines Reifens, besserer Abriebwiderstand, niedrigere T Center-Werte, bessere Naßrutschfestigkeit, bessere Rückprallelastizität, besser im Hitzeaufbau und besser in der Viskosität.

### Beispiele

In den Beispielen werden die folgenden Stoffe eingesetzt:
- First Latex Crepe: - Naturkautschuk
- Ultrasil VN 2: - Gefällte Kieselsäure (Degussa AG) mit einer N₂-Oberfläche von 125 m²/g
- Ultrasil VN 3: - Gefällte Kieselsäure (Degussa AG) mit einer N₂-Oberfläche von 175 m²/g
- CBS: - Benzothiazyl-2-cyclohexylsulfenamid
- TMTM: - Tetramethylthiurammonosulfid
- Si 69: - Bis(3-triethoxysilylpropyl)tetrasulfan (Degussa AG)
- DEG: - Diethylenglykol
- VSL 1955 S 25: - Styrol-Butadien-Kautschuk auf Basis Lösungspolymerisation mit einem Styrolgehalt von 25 % und einem Vinylgehalt von 55 % (Bayer AG)
- DPG: - Diphenylguanidin
- Vulkanox 4020: - N-(1,3 Dimethylbutyl)-N'-phenyl-p-phenylendiamin (Bayer AG)
- Protector G 35: - Ozonschutzwachs
- ZBED: - Zink-dibenzyldithiocarbamat
- Buna CB 24: - Butadienkautschuk der Bunawerke Hüls
- Naftolen ZD: - Aromatischer Mineralölweichmacher
- Hisil 210: - Kieselsäure der PPG mit einer N₂-Oberfläche von ca. 130 m²/g
- Hisil 255: - Kieselsäure der PPG mit einer N₂-Oberfläche von ca. 170 m²/g
- KS 300: - Kieselsäure der Akzo mit einer N₂-Oberfläche von ca. 125 m²/g
- KS 404: - Kieselsäure der Akzo mit einer N₂-Oberfläche von ca. 175 m²/g

Folgende Prüfnormen werden angewandt:

| Prüfungen | Einheit | Norm |
|---|---|---|
| Spannungswert | MPa | DIN 53 504 |
| Compression Set B | % | ASTM D 395 |
| Verlustwinkel tan δ | - | DIN 53 513 |
| DIN-Abrieb | mm³ | DIN 53 516 |
| Firestone Ball-Rebound | % | AD 20 405 |
| Mooney-Viskosität | ME | DIN 53 523/524 |
| Goodrich-Flexometer | | ASTM D 623 A |

### Beispiel 1

### Herstellung einer erfindungsgemäßen Kieselsäure im N₂-Oberflächenbereich von <= 100 m²/g

In einem Bottich werden unter Rühren 43,5 m³ heißes Wasser und so viel handelsübliches Natronwasserglas (Gewichtsmodul 3,42, Dichte 1,348) vorgelegt, bis pH 8,5 erreicht ist. Unter Aufrechterhaltung einer Fälltemperatur von 88 °C und pH 8,5 werden nun 16,8 m³ des gleichen Wasserglases und Schwefelsäure (96 %ig) in 150 Minuten gleichzeitig an gegenüberliegenden Stellen zugegeben. Es stellt sich ein Feststoffgehalt von 100 g/l ein. Danach wird weiter Schwefelsäure bis zum Erreichen von pH < 5 zugegeben. Der Feststoff wird auf Filterpressen abgetrennt, gewaschen und der Pressenteig einer Sprühtrocknung oder Drehrohrofentrocknung unterzogen und gegebenenfalls vermahlen.

Die erhaltene Fällungskieselsäure hat eine N₂-Oberfläche von 80 m²/g, eine Aggregatgröße von 1320 nm und eine Vermahlbarkeit von 10 »m. die Searszahl (V₂) beträgt 9,0 ml und die Hg-Porosimetrie 2,7 ml/g. Die CTAB-Oberfläche beträgt 75 m²/g. Die DBP-Zahl beträgt 236 ml/100 g. Das Verhältnis V₂/V₁ beträgt ... Das Verhältnis DBP/CTAB beträgt ...

### Beispiel 2

### Herstellung einer erfindungsgemäßen Kieselsäure im N₂-Oberflächenniveau von 100 - 150 m²/g

Es wird gemäß Beispiel 1 verfahren, mit der Ausnahme, daß in der Fällvorlage und während der Fällung ein pH-Wert von 9,0 konstant gehalten wird. Nach 135 Minuten stellt sich ein Feststoffgehalt in der Fällungssuspension von 98 g/l ein.

Die erhaltene Fällungskieselsäure hat eine N₂-Oberfläche von 120 m²/g, eine Vermahlbarkeit von 8,8 »m, eine Searszahl 9,1 ml bei einer Aggregatgröße von 490 nm und einem Hg-Porenvolumen von 2,85 ml/g. Die DBP-Zahl beträgt 270 ml/100 g. Die CTAB-Oberfläche beträgt 115 m²/g. Das Verhältnis V₂/V₁ beträgt ... Das Verhältnis DBP/CTAB beträgt 2,34.

### Beispiel 3

### Herstellung einer erfindungsgemäßen Kieselsäure im N₂-Oberflächenniveau von 150 - 200 m²/g

Es wird gemäß Beispiel 2 verfahren mit dem Unterschied, daß die Fällzeit auf 76 Minuten verkürzt und die Fälltemperatur auf 80 °C abgesenkt wird. Nach dieser Zeit erreicht man einen Feststoffgehalt in der Fällsuspension von 100 g/l. Die erhaltene Fällungskieselsäure weist die folgenden physikalisch-chemischen Kenndaten auf:

| | |
|---|---|
| BET-Oberfläche | 184 m²/g |
| Vermahlbarkeit von | 8,7 »m |
| Searszahl | 15,7 ml |

bei einer Aggregatgröße von 381 nm Hg-Porenvolumen 2,26 ml/g. Die CTAB-Oberfläche beträgt 165 m²/g. Die DBP-Zahl beträgt 255 ml/100 g. Das Verhältnis V₂/V₁ beträgt 0,2080 bis 0,2299. Das Verhältnis DBP/CTAB beträgt 1,545.

### Beispiel 4

### Bestimmung des Porenvolumens mittels Hg-Porosimetrie an den erfindungsgemäßen Kieselsäuren im Vergleich zu einigen derzeit bekannten kommerziellen Standardkieselsäuren

- Verfahren:: Hg-Porosimetrie gemäß DIN 66 133, Einpreßverfahren 7-500 bar
- N₂-Oberfläche (m²/g):: 100 - 150

| Produktname | N₂-Oberfläche (m²/g) | Porenvolumen (ml/g) |
|---|---|---|
| Hisil 210 | 130 | 1,54 |
| KS 300 | 125 | 1,98 |
| Ultrasil VN 2 | 125 | 1,82 |
| Erfindungsgemäße Kieselsäure (Beispiel 2) | 120 | 2,85 |

- N₂-Oberfläche (m²/g):: 150 - 200

| Produktname | N₂-Oberfläche (m²/g) | Porenvolumen (ml/g) |
|---|---|---|
| Hisil 255 | 170 | 1,13 |
| KS 404 | 175 | 1,66 |
| Ultrasil VN 3 | 175 | 1,46 |
| Erfindungsgemäße Kieselsäure (Beispiel 3) | 184 | 2,26 |

Die erfindungsgemäßen Kieselsäuren besitzen ein deutlich höheres Porenvolumen.

### Beispiel 5

### Vergleich der Sears-Zahl (V₂) als ein Maß für die OH-Gruppendichte der erfindungsgemäßen Kieselsäuren mit kommerziellen Standardkieselsäuren

- N₂-Oberfläche (m²/g):: 100 - 150

| Produktname | N₂-Oberfläche (m²/g) | V₂(ml)=Verbrauch an NaOH |
|---|---|---|
| Hisil 210 | 130 | 16,8 |
| KS 300 | 125 | 16,1 |
| Ultrasil VN 2 | 125 | 15,0 |
| Erfindungsgemäße Kieselsäure (Beispiel 2) | 120 | 9,1 |

- N₂-Oberfläche (m²/g):: 150 - 200

| Produktname | N₂-Oberfläche (m²/g) | V₂(ml)=Verbrauch an NaOH |
|---|---|---|
| Hisil 255 | 170 | 16,9 |
| KS 404 | 175 | 16,9 |
| Ultrasil VN 3 | 175 | 20,7 |
| Erfindungsgemäße Kieselsäure (Beispiel 3) | 184 | 15,7 |

Je kleiner V₂ = Verbrauch an NaOH, desto niedriger ist die OH-Gruppendichte. Der Vergleich zeigt, daß die erfindungsgemäßen Kieselsäuren bis zu 40 % niedrigere Silanogruppendichte als bekannte Fällungskieselsäuren besitzen können.

### Beispiel 6

### Bestimmung der mittleren Aggregatgröße mittels Photonenkorrelationsspektroskopie

### Parameter:

- Ultraschallzeit:: 15'
- Suspensionsmittel:: Isopropanol/Pentanol 10 : 1
- Einwaage:: 30 mg Kieselsäure auf 10 ml Suspensionsmittel
- N₂-Oberfläche (m²/g):: 100 - 150

| Produktname | N₂-Oberfläche (m²/g) | Mittlere Aggregatgröße (nm) |
|---|---|---|
| Hisil 210 | 130 | 254 |
| KS 300 | 125 | 197 |
| Ultrasil VN 2 | 125 | 191 |
| Erfindungsgemäße Kieselsäure (Beispiel 2) | 184 | 490 |

- N₂-Oberfläche (m²/g):: 150 - 200

| Produktname | N₂-Oberfläche (m²/g) | Mittlere Aggregatgröße (nm) |
|---|---|---|
| Hisil 255 | 170 | 152 |
| KS 404 | 175 | 218 |
| Ultrasil VN 3 | 175 | 167 |
| Erfindungsgemäße Kieselsäure (Beispiel 3) | 120 | 381 |

Die mittlere Aggregatgröße der erfindungsgemäßen Kieselsäuren liegt deutlich über denen der bekannten Fällungskieselsäuren.

### Beispiel 7

### Erfindungsgemäße Kieselsäure gemäß Beispiel 2 im Vergleich zu Ultrasil VN 2 in einer NR-Rezeptur mit Si 69

| | 1 | 2 |
|---|---|---|
| First Latex Crepe | 100 | 100 |
| Ultrasil VN 2 | 50 | - |
| Erfindungsgemäße KS gemäß Beispiel 2 | - | 50 |
| ZnO RS | 4 | 4 |
| Stearinsäure | 2 | 2 |
| DEG | 1 | 1 |
| Si 69 | 3,2 | 3,2 |
| CBS | 1,6 | 1,6 |
| TMTM | 0,3 | 0,3 |
| Schwefel | 0,8 | 0,8 |
| Mooney-Viskosität (ME) | 77 | 69 |

| Vulkanisatdaten: 150 °C/t_{95 %} | | |
|---|---|---|
| Modul 300 % (MPa) | 8,1 | 9,0 |
| Ball Rebound (%) | 56,8 | 58,6 |
| DIN-Abrieb (mm³) | 125 | 114 |
| Goodrich-Flexometer (0,175", 108 N, RT, 18 h) T-Center (°C) | 81,2 | 70,8 |
| MTS (DIN 53 513) tan δ / 60 °C | | |

Die erfindungsgemäße Kieselsäure gemäß Beispiel 2 führt gegenüber dem in der Oberfläche vergleichbaren Ultrasil VN 2 zu niedrigeren Viskositäten, höheren Modul- und Elastizitätswerten, zu verbessertem Abrieb, niedrigerem Hitzeaufbau und niedrigerem Verlustwinkel tan δ bei 60 °C und damit niedrigerem Rollwiderstand.

### Beispiel 8

### Erfindungsgemäße Kieselsäure (Beispiel 3) im Vergleich zu Ultrasil VN 3 in einer L-SBR/BR Reifenlauffläche mit Si 69

| | 1 | 2 |
|---|---|---|
| VSL 1955 S 25 | 96 | 96 |
| Buna CB 24 | 30 | 30 |
| Ultrasil VN 3 | 80 | - |
| Erfindungsgemäße Kieselsäure (Beispiel ) | - | 80 |
| ZnO RS | 3 | 3 |
| Stearinsäure | 2 | 2 |
| Naftolen ZD | 10 | 10 |
| Vulkanox 4020 | 1,5 | 1,5 |
| Protektor G 35 | 1 | 1 |
| Si 69 | 6,4 | 6,4 |
| CBS | 1,5 | 1,5 |
| DPG | 2 | 2 |
| ZBED | 0,2 | 0,2 |
| Schwefel | 1,5 | 1,5 |
| Mooney-Viskosität (ME) | 72 | 68 |

| Vulkanisatdaten: 150 °C/t_{95 %} | | |
|---|---|---|
| Modul 300 % (MPa) | 8,9 | 9,3 |
| Ball Rebound (%) | 52,6 | 54,7 |

| MTS (DIN 53 513) | | |
|---|---|---|
| tan δ / 0 °C | 0,480 | 0,501 |
| tan δ / 60 °C | 0,152 | 0,144 |

Die erfindungsgemäße Kieselsäure besitzt niedrigere Viskosität, höheres Modul, höhere Elastizität und besonders wichtig, höhere Naßrutschfestigkeit bei niedrigem Rollwiderstand gegenüber VN3.

### Beispiel 9

### Vergleich der Dispersion der erfindungsgemäßen Kieselsäure (Beispiel 2) gegen Ultrasil VN 2 (gleiche N₂-Oberfläche von ca. 120 m²/g) (in Anlehnung an die Philipps-Methode, beschrieben in der Technischen Info-Broschüre 102 A)

Aus einer 6-mm-Vulkanisatplatte der Rezeptur gemäß Beispiel 8, gefüllt mit 80 Teilen Ultrasil VN 2 bzw. der erfindungsgemäßen Kieselsäure aus Beispiel 2, bezogen auf 100 Teile Kautschuk wird mittels eines Vibracut der Firma FTB-Feinwerktechnik ein ca. 20 - 30 »m dickes (Fläche ca. 5 x 5 mm) Gummistück herausgeschnitten. Diese Gummiprobe wird auf einen Glasträger übertragen und mit einem zweiten Glasträger abgedeckt. Diese so vorbereitete Probe wird mittels eines Lichtmikroskops mit Aufsichtvorsatz untersucht und in Form eines Negativs mit 55-facher Vergrößerung abgebildet. Von diesem Negativ wird ein Positiv mit der gewünschten Endvergrößerung erstellt.

Die Bewertung der Dispersion gemäß der Philipps-Methode anhand von 10 Standardfotografien erfolgt wie u. a. angegeben

| Nummer | Dispersion |
|---|---|
| 1 - 2 | sehr schlecht |
| 3 - 4 | schlecht |
| 5 - 6 | ausreichend |
| 7 - 8 | gut |
| 9 - 10 | sehr gut |

Die Beurteilung der Dispersion von Ultrasil VN 2 ergibt die Bewertungszahl 5 und damit ausreichend, die der erfindungsgemäßen Kieselsäure aus Beispiel 2 die Bewertungszahl 9 und damit sehr gut.

### Beispiel 10

### Vergleich der Dispersion der erfindungsgemäßen Kieselsäure aus Beispiel 3 gegen Ultrasil VN 3 (gleiche N₂-Oberfläche von ca. 175 m²/g)

Rezeptur, Vorgehungsweise und Beurteilung gehen analog dem Beispiel 9.

Die Beurteilung der Dispersion von Ultrasil VN 3 ergibt die Bewertunszahl 2 und damit sehr schlecht, die der erfindungsgemäßen Kieselsäure gemäß Beispiel 3 die Bewertungszahl 8 und damit gut.

### Beispiel 11

Ermittlung der Dispersion mittels Rauhigkeitsmessung mit einem Gerät der Firma Federal, Dispersions-Analyse EM D-4000-W7. Vergleich zwischen Ultrasil VN 2 und der erfindungsgemäßen Kieselsäure aus Beispiel 2.

Aus einer 2 mm-Vulkanisatplatte der Rezeptur gemäß Beispiel 8, gefüllt mit 80 Teilen Ultrasil VN 2 bzw. der erfindungsgemäßen Kieselsäure aus Beispiel 2, bezogen auf 100 Teile Kautschuk, wird mittels einer vom oben genannten Gerätehersteller mitgelieferten Schneideeinrichtung ein Gummistück (20 x 2 mm) abgeschnitten und in eine vom Gerätehersteller vorgesehene Haltevorrichtung eingespannt. Mit Hilfe einer Diamantnadel wird die Oberfläche des Vulkanisates abgetastet und dabei die aufgrund der Dispersion hervorgerufene Oberflächenrauhigkeit ermittelt. Dieses Verfahren läßt eine quantitative Aussage über die Dispersion zu, indem vom Gerät eine Größe F²H ermittelt wird. F bedeutet hierbei die Anzahl der Peaks und H deren durchschnittliche Höhe. Die Dispersion des Füllstoffs in der Vulkanisatprobe ist dabei umso besser, je niedriger dieser Parameter ist.

Der Parameter F²H bei obengenannten Füllstoffen ergab:

| | Ultrasil VN 2 | Erfindungsgemäße Kieselsäure (Beispiel 2) |
|---|---|---|
| F²H | 82366 | 32556 |

Die erfindungsgemäße Kieselsäure besitzt somit eine deutlich bessere Dispersion. Die Ergebnisse aus Beispiel 9 werden hiermit auch mit dieser Methode bestätigt.

### Beispiel 12

Vergleich der Dispersion von Ultrasil VN 3 und der erfindungsgemäßen Kieselsäure aus Beispiel 3 mit Hilfe der Rauhigkeitsmessung aus Beispiel 11.

Füllgrad und Vorgehensweise gehen hierbei analog Beispiel 11.

| | Ultrasil VN 3 | Erfindungsgemäße Kieselsäure (Beispiel 3) |
|---|---|---|
| F²H | 55601 | 22602 |

Die erfindungsgemäße Kieselsäure besitzt deutlich bessere Dispersionseigenschaften als VN 3. Die gemäß Beispiel 10 gefundenen Ergebnisse werden auch mit dieser Methode bestätigt.

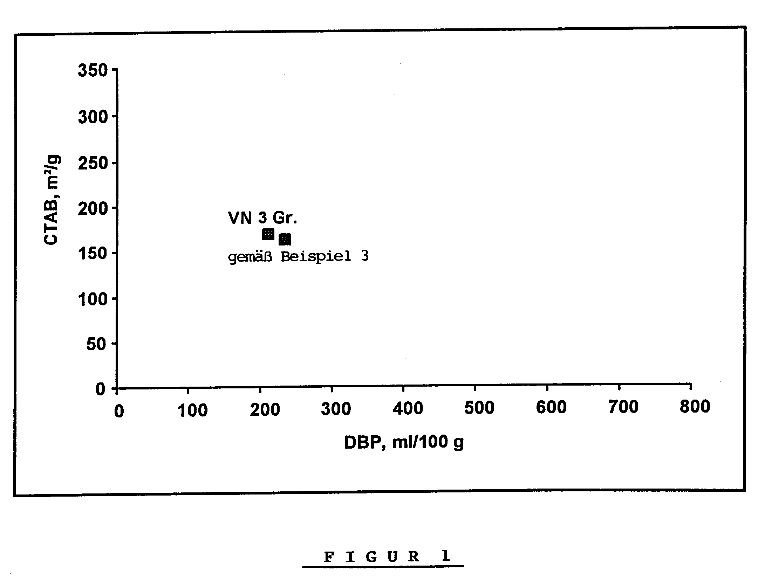

Eine Gegenüberstellung der wesentlichen physikalischchemischen Parameter der erfindungsgemäßen Fällungskieselsäure mit denen der bekannten Fällungskieselsäure ist in den Zeichnungen dargestellt. Es zeigen
- Figur 1: das Verhältnis CTAB zu DPB

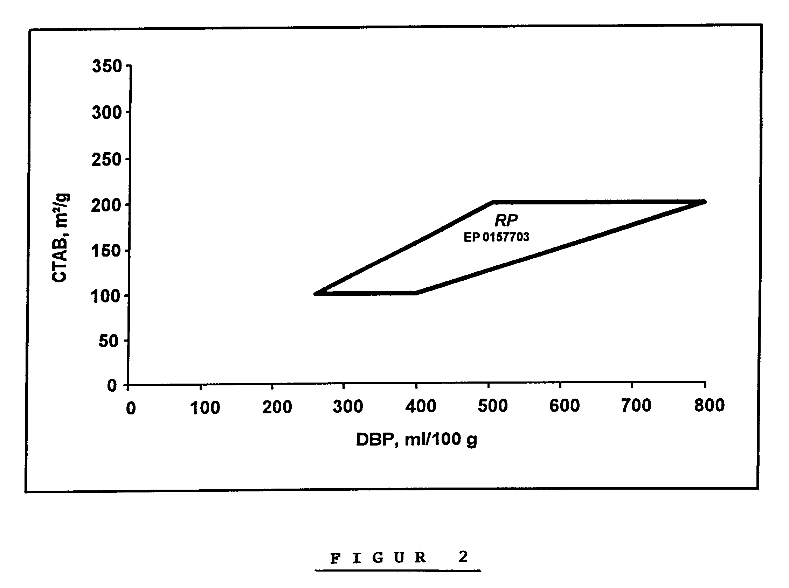

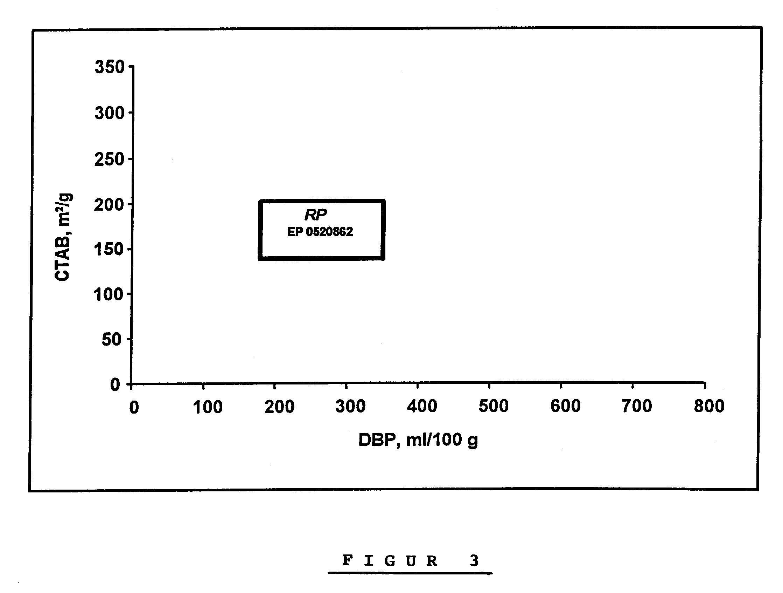

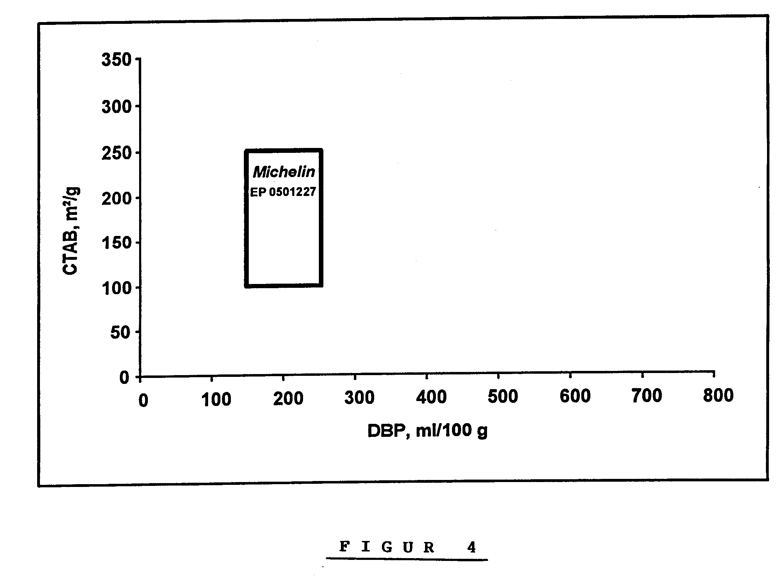

- Figuren 2 bis 4: das Verhältnis CTAB zu DPB

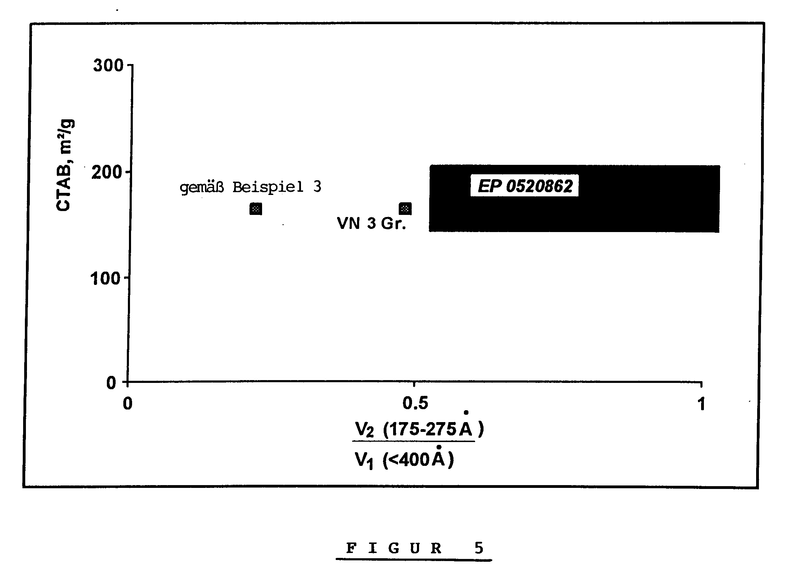

- Figur 5: das Verhältnis CTAB zu V₂/V₁

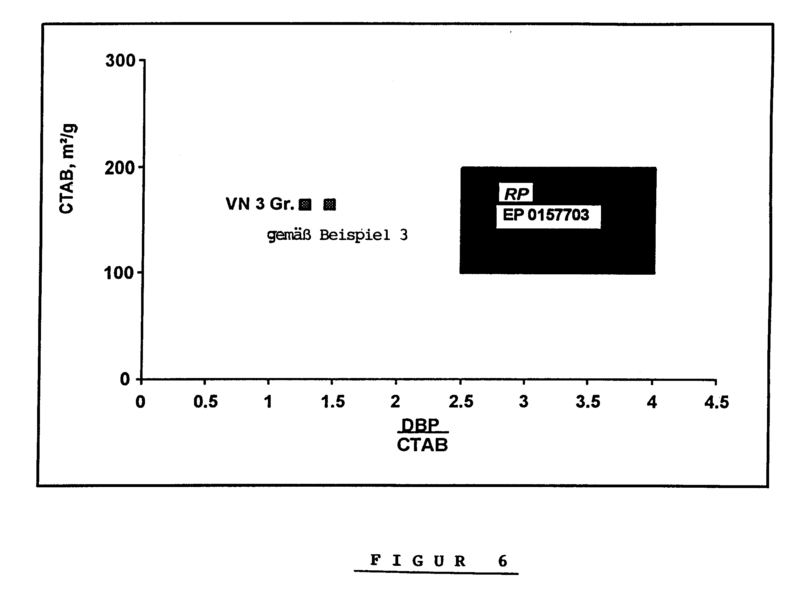

- Figur 6: das Verhältnis CTAB zu DBP/CTAB

## Patentansprüche

1. Fällungskieselsäure, gekennzeichnet durch die folgenden physikalisch-chemischen Parameter:
| | |
|---|---|
| BET-Oberfläche | 35 bis 350 m²/g |
| Verhältnis BET/CTAB-Oberfläche | 0,8 bis 1,1 |
| Porenvolumen PV | 1,6 bis 3,4 ml/g |
| Silanolgruppendichte (V₂=Verbrauch an NaOH) | 6 bis 20 ml |
| Mittlere Aggregatgröße | 250 bis 1500 nm |
| CTAB-Oberfläche | 30 bis 350 m²/g |
| DBP-Zahl | 150 bis 300 ml/100 g |
| V₂/V₁ nach Hg-Porosimetrie | 0,19 bis 0,46 |
| DBP/CTAB | 1,2 bis 2,4 |

2. Verfahren zur Herstellung der Fällungskieselsäure mit den folgenden physikalisch-chemischen Parametern:
| | |
|---|---|
| BET-Oberfläche | 35 bis 350 m²/g |
| Verhältnis BET/CTAB-Oberfläche | 0,8 bis 1,1 |
| Porenvolumen PV | 1,6 bis 3,4 ml/g |
| Silanolgruppendichte (V₂=Verbrauch an NaOH) | 6 bis 20 ml |
| Mittlere Aggregatgröße | 250 bis 1500 nm |
| CTAB-Oberfläche | 30 bis 350 m²/g |
| DBP-Zahl | 150 bis 300 ml/100 g |
| V₂/V₁ nach Hg-Porosimetrie | 0,19 bis 0,46 |
| DBP/CTAB | 1,2 bis 2,4, |
dadurch gekennzeichnet, daß man Alkalisilikat mit Mineralsäuren bei Temperaturen von 60 bis 95 °C unter Aufrechterhaltung eines pH-Wertes von 7,5 bis 10,5 unter kontinuierlichem Rühren umsetzt, die Umsetzung bis zu einer Feststoffkonzentration in der Fällsuspension von 90 bis 120 g/l durchführt, den pH-Wert auf einen Wert gleich oder kleiner 5 einstellt, die Fällungskieselsäure abfiltriert, wäscht, trocknet und gegebenenfalls vermahlt oder granuliert.

3. Vulkanisierbare Kautschukmischungen und Vulkanisate, die die Fällungskieselsäure gemäß Anspruch 1 mit den folgenden physikalisch-chemischen Parametern:
| | |
|---|---|
| BET-Oberfläche | 35 bis 350 m²/g |
| Verhältnis BET/CTAB-Oberfläche | 0,8 bis 1,1 |
| Porenvolumen PV | 1,6 bis 3,4 ml/g |
| Silanolgruppendichte (V₂=Verbrauch an NaOH) | 6 bis 20 ml |
| Mittlere Aggregatgröße | 250 bis 1500 nm |
| CTAB-Oberfläche | 30 bis 350 m²/g |
| DBP-Zahl | 150 bis 300 ml/100 g |
| V₂/V₁ nach Hg-Porosimetrie | 0,19 bis 0,46 |
| DBP/CTAB | 1,2 bis 2,4 |
als Füllstoff enthalten.

## Claims

1. Precipitated silica characterised by the following physicochemical parameters:
| | |
|---|---|
| BET surface area | 35 to 350 m²/g |
| BET/CTAB surface area ratio | 0.8 to 1.1 |
| Pore volume, PV | 1.6 to 3.4 ml/g |
| Silanol group density (V₂ = NaOH consumption) | 6 to 20 ml |
| Average aggregate size | 250 to 1500 nm |
| CTAB surface area | 30 to 350 m²/g |
| DBP value | 150 to 300 ml/100 g |
| V₂/V₁ by Hg porosimetry | 0.19 to 0.46 |
| DBP/CTAB | 1.2 to 2.4. |

2. Process for the production of the precipitated silica with the following physicochemical parameters:
| | |
|---|---|
| BET surface area | 35 to 350 m²/g |
| BET/CTAB surface area ratio | 0.8 to 1.1 |
| Pore volume, PV | 1.6 to 3.4 ml/g |
| Silanol group density (V₂ = NaOH consumption) | 6 to 20 ml |
| Average aggregate size | 250 to 1500 nm |
| CTAB surface area | 30 to 350 m²/g |
| DBP value | 150 to 300 ml/100 g |
| V₂/V₁ by Hg porosimetry | 0.19 to 0.46 |
| DBP/CTAB | 1.2 to 2.4, |
characterised in that alkali silicate is reacted with mineral acids at temperatures of 60 to 95°C while maintaining a pH of 7.5 to 10.5 and continuously stirring, the reaction is continued to a solids concentration in the precipitation suspension of 90 to 120 g/l, the pH value is adjusted to a value of less than or equal to 5, the precipitated silica filtered out, washed, dried and optionally ground or granulated.

3. Vulcanisable rubber compounds and vulcanisates which contain as filler the precipitated silica according to claim 1 with the following physicochemical parameters:
| | |
|---|---|
| BET surface area | 35 to 350 m²/g |
| BET/CTAB surface area ratio | 0.8 to 1.1 |
| Pore volume, PV | 1.6 to 3.4 ml/g |
| Silanol group density (V₂ = NaOH consumption) | 6 to 20 ml |
| Average aggregate size | 250 to 1500 nm |
| CTAB surface area | 30 to 350 m²/g |
| DBP value | 150 to 300 ml/100 g |
| V₂/V₁ by Hg porosimetry | 0.19 to 0.46 |
| DBP/CTAB | 1.2 to 2.4. |

## Revendications

1. Silice de précipitation caractérisée par les paramètres physico-chimiques suivants:
| | |
|---|---|
| Surface BET | 35 à 350 M²/g |
| Rapport BET/surface CTAB | 0,8 a 1,1 |
| Volume de pores PV | 1,6 à 3,4 ml/g |
| Densité des groupes silanol (V2 = consommation de NaOH) | 6 à 20 ml |
| Taille moyenne d'agrégats | 250 à 1500 nm |
| Surface CTAB | 30 à 350 M²/g |
| Nombre DBP | 150 à 300 ml/100g |
| V₂/V₁ selon porosimétrie au Hg | 0,19 à 0,46 |
| DBP/CTAB | 1,2 à 2,4 |

2. Procédé de préparation de silice de précipitation avec les paramètres physico-chimiques suivants:
| | |
|---|---|
| Surface BET | 35 à 350 M²/g |
| Rapport BET/surface CTAB | 0,8 à 1,1 |
| Volume de pores PV | 1,6 à 3,4 ml/g |
| Densité des groupes silanol (V2 = consommation de NaOH) | 6 à 20 ml |
| Taille moyenne d'agrégats | 250 à 1500 nm |
| Surface CTAB | 30 à 350 M²/g |
| Nombre DBP | 150 à 300 ml/100g |
| V₂/V₁ selon porosimétrie au Hg | 0,19 à 0,46 |
| DBP/CTAB | 1,2 à 2,4 |
caractérisé en ce qu'on fait réagir sous agitation continuelle du silicate alcalin avec des acides minéraux à des températures de 60 à 95°C en maintenant une valeur de pH de 7,5 à 10,5, en ce qu'on réalise la réaction jusqu'à une concentration en matière solide dans la suspension de précipitation de 90 à 120 g/l, on ajuste le pH à une valeur égale ou inférieure à 5, on enlève par filtrage la silice de précipitation, on lave, on sèche et éventuellement on broie on granule.

3. Mélange de caoutchouc vulcanisables et de produits de vulcanisation, qui contiennent comme matière de charge la silice de précipitation selon la revendication 1 avec les paramètres physico-chimiques suivants:
| | |
|---|---|
| Surface BET | 35 à 350 M²/g |
| Rapport BET/surface CTAB | 0,8 à 1,1 |
| Volume de pores PV | 1,6 à 3,4 ml/g |
| Densité des groupes silanol (V2 = consommation de NaOH) | 6 à 20 ml |
| Taille moyenne d'agrégats | 250 a 1500 nm |
| Surface CTAB | 30 à 350 M²/g |
| Nombre DBP | 150 à 300 ml/100g |
| V₂/V₁ selon porosimétrie au Hg | 0,19 à 0,46 |
| DBP/CTAB | 1,2 à 2,4 |
